# FASCICULE DE BREVET EUROPEEN

(11) **EP 3 673 351 B1**
(45) Date de publication et mention de la délivrance du brevet: **16.06.2021**
(21) Numéro de dépôt: 18752822.9
(22) Date de dépôt: 17.07.2018
(51) Int. Cl.: G06F 3/041, G06F 11/22, G06F 3/044

(54) **DISPOSITIF ET METHODE DE TEST DE L'UTILISATION D'UNE SURFACE CAPACITIVE AVEC UN GANT**
VORRICHTUNG UND VERFAHREN ZUM TESTEN DER VERWENDUNG EINER KAPAZITIVEN OBERFLÄCHE MIT EINEM HANDSCHUH
DEVICE AND METHOD FOR TESTING THE USE OF A CAPACITIVE SURFACE WITH A GLOVE

(30) Priorité: 24.08.2017 FR 1757847
(43) Date de publication de la demande: 01.07.2020
(73) Titulaire: PSA Automobiles SA, 78300 Poissy (FR)
(72) Inventeur: CARVALHO, Jorge Filipe, 91420 Morangis (FR)
(86) Numéro de dépôt international: PCT/FR2018/051826
(87) Numéro de publication internationale: WO 2019/038488

(56) Documents cités:
- EP-A2- 2 442 215
- EP-B1- 2 810 144
- US-A1- 2015 138 162

## Description

L'invention concerne, de façon générale, la technologie capacitive, en particulier les écrans tactiles capacitifs montés au sein de véhicules automobiles.

L'invention porte plus particulièrement sur un dispositif et un procédé de test de l'utilisation d'une surface capacitive avec un gant.

Aujourd'hui, des écrans et des commandes de contrôle tactiles sont utilisés dans de nombreux domaines, notamment dans le domaine automobile. En effet, ceux-ci permettent d'afficher des informations, telles que la navigation par satellite, qui peuvent être vues par un utilisateur, tout en permettant à cet utilisateur d'interagir avec l'écran et les commandes de contrôle en pointant sur l'écran pour saisir des données, notamment une adresse de destination.

Il existe différentes technologies d'écran tactile : les écrans tactiles dits « résistifs » et les écrans tactiles dit « capacitifs ».

Un écran résistif comprend deux dalles conductrices : une dalle en verre et une dalle en plastique souple. Les deux dalles sont séparées de manière à ce qu'au repos, aucun courant électrique ne passe entre les deux dalles. Lorsqu'un utilisateur appuie son doigt sur la dalle en plastique, cette dernière se déforme jusqu'à toucher la dalle en verre. Un courant électrique passe alors entre les deux dalles au niveau du point où l'utilisateur a appuyé son doigt, ce qui permet à l'écran de détecter que l'utilisateur a touché l'écran.

Cependant, un tel écran nécessite d'exercer une certaine pression à chaque contact du doigt sur l'écran, ce qui est fastidieux.

Un écran capacitif ne comprend pas de dalle souple mais une dalle en verre dans laquelle circule une charge électrique. Lorsque l'utilisateur pose un doigt sur l'écran, la charge électrique est alors transmise à l'utilisateur via son doigt. L'écran détecte alors une fuite de charge, ce qui lui permet de détecter que l'utilisateur a touché l'écran.

Un tel écran capacitif est ainsi plus agréable à utiliser car il suffit à l'utilisateur d'effleurer du doigt l'écran pour que ce dernier détecte la position du doigt de l'utilisateur sur l'écran.

Cependant, un tel écran capacitif présente des inconvénients. En effet, la perte de charge détectée par l'écran capacitif est possible car le doigt de l'utilisateur est conducteur électrique du fait de son humidité. Or, dans le cas où ce dernier porte des gants, ces gants ne présentent pas toujours une conductivité électrique suffisante pour que la charge électrique de l'écran soit transmise au doigt à travers le gant et donc que l'écran détecte que l'utilisateur a posé son doigt sur l'écran.

Il est donc nécessaire de tester les gants afin de vérifier si ceux-ci sont compatibles avec l'utilisation d'un écran capacitif.

On connaît par le document KR 20140026791 A, un procédé de test d'un écran capacitif afin de valider la détection par l'écran lorsqu'un utilisateur pose un doigt sur l'écran. Cependant, un tel procédé ne permet pas de tester l'utilisation d'un écran et de commandes de contrôle capacitifs avec des gants.

Une solution évidente serait d'utiliser le procédé de test décrit dans ce document en utilisant des gants. Cependant, de tels tests avec des gants ne sont pas répétables, ce qui ne permet pas de donner un avis sur l'utilisation de ces gants avec un écran capacitif et représente donc un inconvénient majeur. On connait aussi par le document US2015138162 un système et un procédé pour mesurer la latence dans un dispositif. Dans un mode de réalisation, un support de dispositif est configuré pour recevoir le dispositif sous test. Un moteur mécanique est configuré pour déplacer un dispositif proxy par rapport au dispositif testé. L'invention concerne un appareil de mesure configuré pour enregistrer le mouvement du dispositif proxy d'entrée par rapport au dispositif sous test et pour enregistrer une représentation du mouvement généré par une application de test s'exécutant sur le dispositif sous test. On connait aussi par le document EP2810144 un dispositif électronique portable comprenant une interface utilisateur de détection de proximité et un contrôleur. L'interface utilisateur de détection de proximité est configurée pour capturer des informations de position et des informations de distance. Le contrôleur est couplé à l'interface utilisateur de détection de proximité et est configuré pour traiter les premières informations de distance capturées par l'interface utilisateur de détection de proximité pendant une action tactile prédéterminée, pour déterminer si une couche de matériau est interposée entre la peau de l'utilisateur et l'interface utilisateur de détection de proximité. On connait aussi par le document EP2442215 un dispositif de capteur tactile capacitif empêchant des déterminations de contact erronées; et un appareil électronique comprenant le dispositif à capteur tactile. Le dispositif de capteur tactile comprend: un panneau tactile sur lequel une capacité est formée avec un pointeur; un moyen de calcul de signal calculant une valeur de sortie de signal sur la base d'une amplitude de la capacité; un moyen de détermination de contact comparant la valeur de sortie du signal à un seuil et déterminant si le pointeur a été mis en contact avec ou séparé du panneau tactile.

L'invention vise donc à résoudre ces inconvénients en proposant une solution fiable et répétable afin de valider l'utilisation de gants avec une surface capacitive.

Pour parvenir à ce résultat, la présente invention concerne un dispositif de test de l'utilisation d'une surface capacitive avec un gant, ledit dispositif comprenant une jauge réalisée en un matériau conducteur électrique adaptée pour être détectable par ladite surface capacitive à tester, et une plaque, réalisée en un matériau non conducteur électrique, adaptée pour être placée entre la surface capacitive à tester et ladite jauge, ladite plaque présentant une épaisseur adaptée pour simuler ledit gant.

Grâce au dispositif de test selon l'invention, des tests d'utilisation de gants avec une surface capacitive peuvent être réalisés de manière aisée et répétée en utilisant la plaque de simulation en lieu et place d'un gant. L'utilisation d'une jauge montée mobile en lieu et place d'un doigt d'un utilisateur permet également de répéter aisément les tests. La répétabilité des tests permet ainsi de garantir la validation ou la non validation d'une telle utilisation des gants en réalisant plusieurs tests afin de vérifier si les résultats se répètent. De plus, les caractéristiques (matériau, épaisseur, forme, etc.) de la plaque peuvent être modifiées afin de simuler différents types de gants : notamment des gants de différentes épaisseurs et en différents matériaux.

Avantageusement, la surface capacitive est un écran tactile capacitif.

Avantageusement, la plaque comprend du polypropylène. La plaque peut également comprendre un matériau similaire ou équivalent.

Avantageusement, la plaque présente une épaisseur comprise entre 1mm et 2mm.

Avantageusement, la jauge comprend du cuivre.

Avantageusement, la jauge présente une forme cylindrique dont le diamètre est supérieur à 6mm.

Avantageusement, la jauge est montée mobile de manière à se déplacer vers la surface capacitive lors d'un test.

L'invention concerne également un procédé de test, à l'aide d'un dispositif tel que décrit précédemment, de l'utilisation d'une surface capacitive avec un gant. Ledit procédé comprenant une étape de mise en place de ladite surface capacitive à tester sur ledit dispositif de test, ladite surface capacitive comprenant une dalle chargée électriquement et ladite dalle chargée électriquement étant orientée vers la jauge du dispositif de test, une étape de déplacement de la jauge vers la surface capacitive jusqu'à ce que la plaque entre en contact avec la surface capacitive, et une étape de validation de l'utilisation du gant avec la surface capacitive si la surface capacitive détecte la jauge à travers la plaque.

D'autres caractéristiques et avantages de l'invention apparaîtront à la lecture de la description détaillée des modes de réalisation de l'invention, donnés à titre d'exemple uniquement, et en référence aux dessins qui montrent :
- la figure 1, un schéma d'une forme de réalisation du dispositif, selon l'invention, de test d'une surface capacitive, et
- la figure 2, un schéma d'une étape de la méthode, selon l'invention, de test à l'aide du dispositif de la figure 1.

Dans ce qui va suivre, les modes de réalisation décrits s'attachent plus particulièrement à une mise en œuvre de l'invention pour des surfaces capacitives montées au sein d'un véhicule automobile. Cependant, toute mise en œuvre dans un contexte différent, en particulier pour des surfaces capacitives montées dans tout type d'appareil ou de véhicule, est également visée par la présente invention.

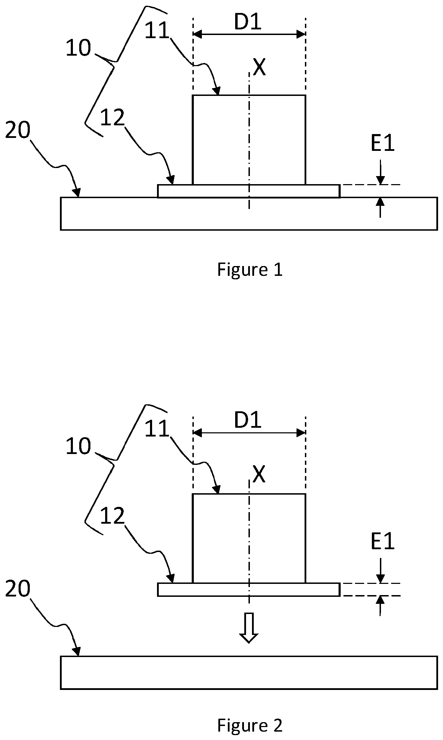

La figure 1 représente une forme de réalisation d'un dispositif de test 10 d'un écran tactile capacitif 20. Ce dispositif de test 10 permet de valider l'utilisation de l'écran tactile capacitif 20 par un utilisateur portant des gants.

Il est décrit l'utilisation d'un écran tactile capacitif 20, mais il va de soi qu'il pourrait s'agir de tout type de surface capacitive utilisant la technologie capacitive, notamment une façade multiplexée, un système de réglage des rétroviseurs du véhicule, etc.

Dans cet exemple, l'écran tactile capacitif 20 est adapté pour être monté dans un véhicule automobile, notamment au niveau de la console centrale. Un tel écran 20 peut, par exemple, permettre d'utiliser un système de guidage par satellite, un lecteur de musique, régler les rétroviseurs du véhicule, etc.

L'écran tactile capacitif 20 rempli ainsi une double fonction d'affichage d'informations et d'interface de saisie avec l'utilisateur. Dans ce but, l'écran tactile capacitif 20 comprend un module d'affichage et un module de pointage (non représentés).

Le module d'affichage se présente sous la forme d'un écran adapté pour afficher des informations afin qu'un utilisateur du véhicule puisse voir ces informations. Le module d'affichage peut ainsi afficher les données du système de navigation par satellite afin que le conducteur du véhicule suive un trajet, les données du lecteur de musique, etc.

Le module de pointage permet à l'utilisateur d'interagir avec le véhicule à l'aide de la technologie capacitive. Pour ce faire, l'écran tactile capacitif 20 comprend une dalle en verre dans laquelle circule une charge électrique. Lorsque l'utilisateur pose un doigt sur l'écran tactile capacitif 20, la charge électrique est alors transmise à l'utilisateur via son doigt. Le module de pointage détecte alors une fuite de charge dans la dalle en verre, ce qui lui permet de déterminer que l'utilisateur a touché l'écran et où il l'a touché.

Toutes les surfaces capacitives utilisant la technologie capacitive comprennent une telle dalle chargée électriquement.

Il est représenté sur les figures 1 et 2 un écran tactile capacitif 20 dont la surface de la dalle est plane. Cependant, il va de soi qu'elle pourrait présenter une forme quelconque, notamment galbée.

Le module de pointage permet notamment à l'utilisateur de saisir l'adresse à laquelle il désire se rendre, choisir de la musique, etc. Dans ce but, l'utilisateur effleure l'écran tactile capacitif 20 du doigt et le module de pointage détecte la position à laquelle le doigt à effleurer l'écran tactile capacitif 20.

Lors de l'utilisation de l'écran tactile capacitif 20, le module d'affichage peut afficher des touches, désignant par exemple des lettres ou des chiffres, que l'utilisateur sélectionne en appuyant dessus avec le doigt. Le module de pointage détecte alors sur quelle touche l'utilisateur a posé le doigt. Ainsi, par sélections successives, l'utilisateur peut saisir une adresse ou le titre d'un morceau de musique par exemple.

Un tel écran tactile capacitif 20 étant connu, il ne sera pas décrit plus en détail.

Le dispositif de test 10 selon l'invention permet de tester un écran tactile capacitif 20 lorsque l'utilisateur porte un gant.

Comme illustré sur la figure 1, le dispositif de test 10 comprend une jauge 11 permettant de reproduire le doigt d'un utilisateur et une plaque 12 de simulation d'un gant porté par l'utilisateur.

La jauge 11 permet d'appuyer sur l'écran tactile capacitif 20 à la façon d'un doigt d'un utilisateur. Autrement dit, la jauge 11 permet de simuler la saisie sur l'écran tactile capacitif 20.

La jauge 11 comprend un matériau conducteur électrique, tel que du cuivre, afin de réagir avec la dalle de l'écran tactile capacitif 20.

La jauge 11 présente une forme cylindrique s'étendant selon un axe longitudinal X. Dans cet exemple, la jauge 11 présente une base de forme circulaire, cependant, il va de soi que toute autre forme pourrait convenir. Afin que la jauge 11 soit détectée par l'écran tactile capacitif 20, la base circulaire de la jauge 11 présente un diamètre D1 supérieure à 6mm.

Il a été présenté une jauge 11 cylindrique, cependant, il va de soi que la jauge 11 pourrait présenter toute autre forme, adaptée pour que la jauge 11 soit détectée par l'écran tactile capacitif 20.

La plaque 12 de simulation est placée entre la jauge 11 et l'écran tactile capacitif 20 de manière à simuler un gant porter par un utilisateur de l'écran tactile capacitif 20.

La plaque 12 présente une forme de plaque dont la surface est supérieure à celle de la face de la jauge 11 adaptée pour entrer en contact avec l'écran tactile capacitif 20. Dans l'exemple d'une jauge 11 de base circulaire de diamètre 6mm, la plaque 12 présente une longueur et une largeur supérieure à 6mm.

Il est représenté sur les figures 1 et 2 une plaque 12 de forme plane. Cependant, il va de soi qu'elle pourrait présenter toute forme adaptée à la surface capacitive 20, notamment une forme quelconque ou galbée.

La plaque 12 est réalisée en un matériau non conducteur électrique afin de se comporter comme un gant vis-à-vis de la dalle chargée électriquement de l'écran tactile capacitif 20. Dans cet exemple, la plaque 12 comprend du polypropylène, cependant, il va de soi que tout autre matériau adapté pour simuler un gant pourrait convenir.

L'épaisseur E1 de la plaque 12 est adaptée pour simuler différents types de gants. Dans cet exemple, l'épaisseur E1 est comprise entre 1mm et 2mm. Autrement dit, la plaque 12 est utilisée comme un étalon pour simuler les caractéristiques des matériaux et de l'épaisseur des gants.

Pour simuler un gant en cuir, dont l'épaisseur est de 0.8mm, ou un gant en cuir artificiel, dont l'épaisseur est de 0.4mm, la plaque 12 présente une épaisseur E1 de 1mm. Pour simuler un gant en polyester, dont l'épaisseur est de 1.6mm, ou un gant en cuir, dont l'épaisseur est de 1.4mm, la plaque 12 présente une épaisseur E1 de 1.5mm. Enfin, pour simuler un gant en coton, dont l'épaisseur est de 2mm, un gant en nylon, dont l'épaisseur est de 1.8mm, ou bien un gant en cuir, dont l'épaisseur est de 2mm, la plaque 12 présente une épaisseur E1 de 2mm.

Il a été présenté une épaisseur E1 de la plaque 12 comprise entre 1mm et 2mm, cependant, il va de soi que cette épaisseur E1 pourrait varier selon les matériaux compris dans la plaque 12 et les types de gants à simuler.

L'utilisation du dispositif de test 10 selon l'invention permet de valider l'utilisation de gants pour des écrans tactiles capacitifs 20. Avantageusement, l'utilisation d'une plaque 12 de simulation d'un gant permet de reproduire aisément des tests de validation. Ainsi, les tests sont harmonisés et la qualité des gants peut être comparée.

Il va maintenant être présenté le procédé selon l'invention de test de l'utilisation d'un écran tactile capacitif 20 avec des gants à l'aide du dispositif de test 10.

Tout d'abord, un écran tactile capacitif 20 est placé sur le dispositif de test 10, la dalle chargée électriquement orientée vers la jauge 11 du dispositif de test 10.

Puis, une plaque 12 de simulation est placée entre la jauge 11 et l'écran tactile capacitif 20 afin de simuler un gant. La plaque 12 de simulation, notamment son épaisseur E1 et son matériau, est choisie de manière à simuler un type de gant dont on souhaite valider l'utilisation avec l'écran tactile capacitif 20.

Avant un test, la jauge 11 est placée à distance de l'écran tactile capacitif 20 comme illustré sur la figure 2, de manière à ce que l'écran tactile capacitif 20 ne détecte aucune sélection sur la dalle chargée. L'écran tactile capacitif 20 est alors au repos.

Un test est alors lancé. Dans ce but, la jauge 11 est déplacée vers l'écran tactile capacitif 20 jusqu'à ce que la plaque 12 de simulation entre en contact avec l'écran tactile capacitif 20.

L'écran tactile capacitif 20 détecte alors le point de contact sur la dalle chargée électriquement et détermine la position à laquelle la plaque 12 de simulation est en contact avec l'écran tactile capacitif 20.

Si l'écran tactile capacitif 20 ne détecte pas de point de contact, l'utilisation du gant avec l'écran tactile capacitif 20 n'est pas validée. Autrement dit, un tel gant ne peut être utilisé avec un écran tactile capacitif 20.

A la fin du test, la jauge 11 est alors déplacée en sens inverse de manière à ce que la plaque 12 de simulation ne soit plus en contact avec l'écran tactile capacitif 20 et que ce dernier soit à nouveau au repos.

Avantageusement, un tel test peut être reproduit aisément afin de garantir la validation ou non de l'utilisation du type de gant avec l'écran tactile capacitif 20.

## Revendications

1. Dispositif de test (10) de l'utilisation d'une surface capacitive (20) avec un gant, ledit dispositif (10) comprenant :
- une jauge (11) réalisée en un matériau conducteur électrique adaptée pour être détectable par ladite surface capacitive (20) à tester, et
- une plaque (12), réalisée en un matériau non conducteur électrique, adaptée pour être placée entre la surface capacitive (20) à tester et ladite jauge (11), ladite plaque (12) présentant une épaisseur adaptée pour simuler ledit gant.

2. Dispositif (10) selon la revendication 1, dans lequel la surface capacitive est un écran tactile capacitif (20).

3. Dispositif (10) selon l'une des revendications précédentes, dans lequel la plaque (12) comprend du polypropylène ou un matériau équivalent.

4. Dispositif (10) selon l'une des revendications précédentes, dans lequel la plaque (12) présente une épaisseur (E1) comprise entre 1mm et 2mm.

5. Dispositif (10) selon l'une des revendications précédentes, dans lequel la jauge (11) comprend du cuivre.

6. Dispositif (10) selon l'une des revendications précédentes, dans lequel la jauge (11) présente une forme cylindrique dont le diamètre est supérieur à 6mm.

7. Dispositif (10) selon l'une des revendications précédentes, dans lequel la jauge (11) est montée mobile de manière à se déplacer vers la surface capacitive (20) lors d'un test.

8. Procédé de test, à l'aide d'un dispositif (10) selon l'une des revendications précédentes, de l'utilisation d'une surface capacitive (20) avec un gant, ledit procédé comprenant :
- une étape de mise en place de ladite surface capacitive (20) à tester sur ledit dispositif de test (10), ladite surface capacitive (20) comprenant une dalle chargée électriquement et ladite dalle chargée électriquement étant orientée vers la jauge (11) du dispositif de test (10),
- une étape de déplacement de la jauge (11) vers la surface capacitive (20) jusqu'à ce que la plaque (12) entre en contact avec la surface capacitive (20), et
- une étape de validation de l'utilisation dudit gant avec la surface capacitive si la surface capacitive (20) détecte la jauge (11) à travers la plaque (12).

## Patentansprüche

1. Vorrichtung zum Testen (10) der Verwendung einer kapazitiven Oberfläche (20) mit einem Handschuh, wobei die Vorrichtung (10) umfasst:
- ein Messgerät (11) aus einem elektrisch leitfähigen Material, das von der zu prüfenden kapazitiven Oberfläche (20) erfasst werden kann, und
- eine Platte (12) aus einem elektrisch nicht leitenden Material, die zwischen der zu prüfenden kapazitiven Oberfläche (20) und dem Messgerät (11) angeordnet werden kann, wobei die Platte (12) eine Dicke aufweist, die den Handschuh simulieren kann.

2. Das Gerät (10) nach Anspruch 1 , wobei die kapazitive Oberfläche ein kapazitiver Touchscreen (20) ist.

3. Die Vorrichtung (10) nach einem der vorhergehenden Ansprüche, wobei die Platte (12) aus Polypropylen oder einem gleichwertigen Material besteht.

4. Die Vorrichtung (10) nach einem der vorhergehenden Ansprüche, wobei die Platte (12) eine Dicke (E1) zwischen 1 mm und 2 mm aufweist.

5. Vorrichtung (10) nach einem der vorhergehenden Ansprüche, wobei die Lehre (11) aus Kupfer besteht.

6. Vorrichtung (10) nach einem der vorhergehenden Ansprüche, wobei die Lehre (11) eine zylindrische Form mit einem Durchmesser von mehr als 6 mm aufweist.

7. Vorrichtung (10) nach einem der vorhergehenden Ansprüche, wobei das Messgerät (11) beweglich montiert ist, so dass es sich während einer Prüfung in Richtung der kapazitiven Oberfläche (20) bewegt.

8. Verfahren zum Testen der Verwendung einer kapazitiven Oberfläche (20) mit einem Handschuh unter Verwendung einer Vorrichtung (10) nach einem der vorhergehenden Ansprüche, wobei das Verfahren umfasst:
- einen Schritt des Platzierens der zu prüfenden kapazitiven Oberfläche (20) auf der Testvorrichtung (10), wobei die kapazitive Oberfläche (20) eine elektrisch geladene Platte umfasst und die elektrisch geladene Platte in Richtung der Lehre (11) der Testvorrichtung (10) ausgerichtet ist,
- einen Schritt des Bewegens des Messgeräts (11) in Richtung der kapazitiven Oberfläche (20), bis die Platte (12) die kapazitive Oberfläche (20) berührt, und
- einen Schritt der Freigabe der Verwendung des Handschuhs mit der kapazitiven Oberfläche, wenn die kapazitive Oberfläche (20) das Messgerät (11) durch die Platte (12) hindurch erfasst.

## Claims

1. A device for testing (10) the use of a capacitive surface (20) with a glove, said device (10) comprising :
- a gauge (11) made of an electrically conductive material adapted to be detectable by said capacitive surface (20) to be tested, and
- a plate (12), made of an electrically non-conductive material, adapted to be placed between the capacitive surface (20) to be tested and said gauge (11), said plate (12) having a thickness adapted to simulate said glove.

2. The device (10) of claim 1, wherein the capacitive surface is a capacitive touch screen (20).

3. The device (10) according to any of the preceding claims, wherein the plate (12) comprises polypropylene or an equivalent material.

4. A device (10) according to any of the preceding claims, wherein the plate (12) has a thickness (E1) of between 1mm and 2mm.

5. A device (10) according to any of the preceding claims, wherein the gauge (11) comprises copper.

6. A device (10) according to any of the preceding claims, wherein the gauge (11) has a cylindrical shape with a diameter greater than 6mm.

7. A device (10) according to any of the preceding claims, wherein the gauge (11) is movably mounted so as to move towards the capacitive surface (20) during a test.

8. A method of testing, using a device (10) according to any of the preceding claims, the use of a capacitive surface (20) with a glove, said method comprising:
- a step of placing said capacitive surface (20) to be tested on said test device (10), said capacitive surface (20) comprising an electrically charged slab and said electrically charged slab being oriented towards the gauge (11) of the test device (10),
- a step of moving the gauge (11) towards the capacitive surface (20) until the plate (12) contacts the capacitive surface (20), and
- a step of enabling the use of said glove with the capacitive surface if the capacitive surface (20) detects the gauge (11) through the plate (12).
